# EUROPEAN PATENT SPECIFICATION

(11) **EP 1 775 107 B1**
(45) Date of publication and mention of the grant of the patent: **06.01.2010**
(21) Application number: 05109657.6
(22) Date of filing: 17.10.2005
(51) Int. Cl.: B29C 70/34, B29C 70/54

(54) **Moulding method with sliding layer**
Formverfahren mit einer Gleitschicht
Procédé de moulage avec une couche de glissement

(43) Date of publication of application: 18.04.2007
(73) Proprietor: SAAB AB, 581 88 Linköping (SE)
(72) Inventor: Krogager, Max, 582 42 Linköping (SE); Strindberg, Göte, 589 41 Linköping (SE); Petersson, Mikael, 585 90 Linköping (SE); Weidmann, Björn, 590 31 Borensberg (SE)
(74) Representative: Akerman, Marten Lennart

(56) References cited:
- EP-A- 0 419 401
- EP-A- 0 465 399
- EP-A- 0 933 182
- US-A- 4 608 220
- PATENT ABSTRACTS OF JAPAN vol. 017, no. 705 (M-1534), 22 December 1993 (1993-12-22) & JP 05 245836 A (SHIMANO INC), 24 September 1993 (1993-09-24)

## Description

### Technical field

The present invention relates to methods and means for producing articles of composite material. More specifically, the invention relates to articles made of fibre laminate and a matrix, e.g. epoxy resin.

### Background

Aircraft manufacturers are under an increasing pressure to produce lightweight, strong and resistant aircraft which also has the lowest productions costs and also low costs for maintenance during the entire lifetime of the aircraft. An aircraft must be strong enough to cope with stresses during take-off, high altitude cruising and landing, and at the same time it must be as easy as possible to maximise the performance of the aircraft. Partly because of this, aircraft manufacturers have started to use fibre reinforced resin matrix composites.

Such fibre reinforced resin matrix composites provide improved strength, wear resistance, rigidity and strength-weight relationship by comprising strong, rigid carbon fibres in a softer, more tensile resin matrix. The resin matrix material transmits forces to the fibres and provides stretching and toughness characteristics, since the fibres bear a major part of the applied forces.

Known methods for producing fibre reinforced resin matrix composites for an aircraft comprise that a number of so called prepreg sheets, or simply abbreviated as "prepregs" are put on top of each other in contact with a moulding tool. The prepreg consists of unidirectional fibres or multi-directional fibres in an uncured resin. A vacuum bag is placed over and is sealed towards the moulding tool so that the entire component is completely enclosed. Vacuum is then applied to the enclosed component so that the prepregs are becoming compacted towards the surface of the moulding tool.

When producing e.g. a composite spar it is often advantageous to use a female tool for obtaining good tolerances for the outer surfaces. Unfortunately it is difficult to put up a composite laminate with prepregs in a female tool since the material is sticky and gets stuck. It is much easier to put up a laminate on a male tool.

US 4,608,220 discloses a method in accordance with the preamble of claim 1, for producing an article from a preplied stack of composite material using a in a first step a male mold to produce an accurately formed inner surface of the article, and in a second step rotating the male mold with the stack, holding the stack in position with the aid of a caul. In a further step the stack is brought into contact with a female mold to produce outer dimensions with close tolerances, the male mold is moved away.

### Summary of the invention

In a method according to a preferred embodiment of the present invention, the laminate is put up, i.e. the prepregs are put up on a moulding tool of male type and, after all prepregs layers being put up, the whole laminate is thereafter tilted or overturned into a female tool. The difficulty has so far been that the prepreg material easily gets stuck in the edges of the female tool, and thus hinders an accurate placing of the laminate in the female tool. By arranging an ultimate layer of "dry" cloth on top of the fibre stack being formed by prepregs on the male tool, the advantage is obtained that the fibre stack slides more easily down in the female tool at the step of overturning. "Dry" cloth shall in this specification be interpreted to mean a cloth which has not been pre-impregnated with any sticky material whatsoever, or with so small quantities that these quantities do not affect the stickyness but the material slides easily when in contact with the moulding tool, which may be of metal.

Thus, the present invention, according to some embodiments, provides a method for producing an article of composite material comprising the steps of:
- providing a moulding tool of male type:
- placing one or several prepregs on the moulding tool, forming a fibre stack;
- placing a dry layer, e.g. fabric, on the outside of the fibre stack, forming a fibre stack having a dry surface;
- providing a female moulding tool;
- tilting or overturning the stack having a dry surface from the male tool to the female tool.

Furthermore, the method may comprise the step of arranging said dry fibre layer so that this encloses the edge of the fibre stack. The dry layer may by made of a metal net or other similar metal structures, or of glass fibre fabric or another similar glass fibre structure, or a combination of glass fibre and metal. The fact that metal is an electrical conducting material and that glass fibre is an isolator may be exploited.

It is advantageous that the dimensions of the male tool and the female tool are adapted so that they match each other, and adapted to the thickness of the fibre stack having a dry surface, so that in case of overturning the fibre stack having a dry surface easily slides down in the female tool.

### Brief description of the drawings

The above aspects and further advantage of the present invention will become more apparent and further appreciated when the following detailed description is read in conjunction with the accompanying drawings, in which:

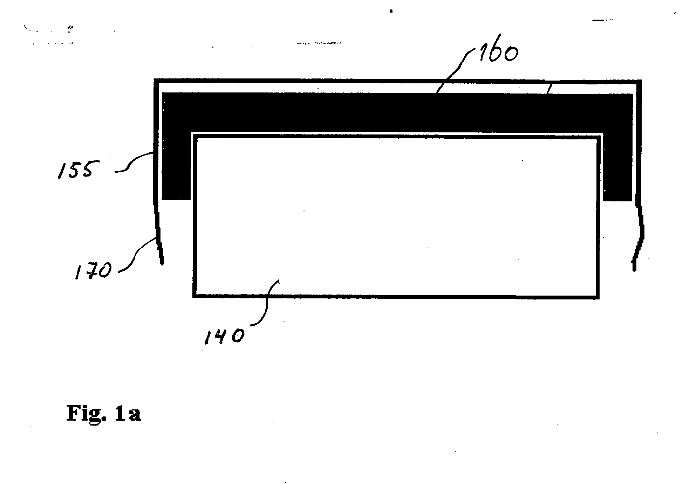

Fig. 1a shows a male tool with an arranged composite material and an externally arranged dry fabric.

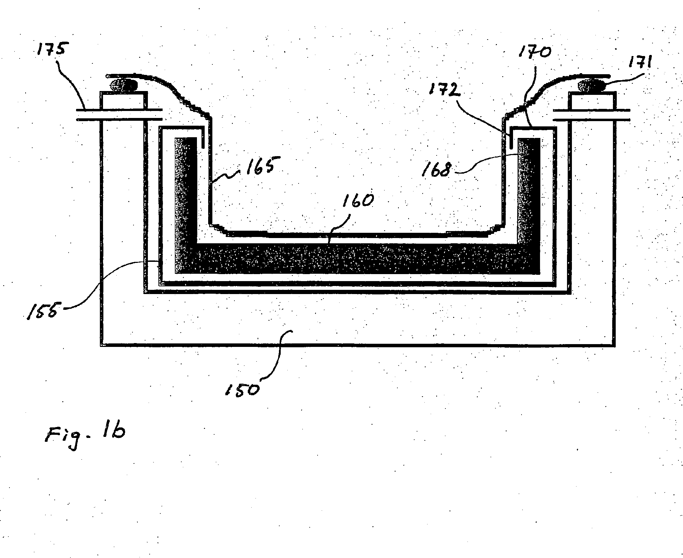

Fig. 1b shows a female tool with an arranged fibre stack after that the step of overturning the fibre stack in fig. 1a has been carried out, wherein the dry layer has ended up closest to the surface of the moulding tool.

### Detailed description of preferred embodiments

In the present specification, the following terms shall be interpreted as follows:
Matrix - "Matrix" shall here be interpreted to be a material which, as is well known in this technical field, binds together the fibres in a composite material, or a material which is used in order to bind together the fibres in a composite material.
Fibre tape - "Fibre tape" shall here be interpreted as being a fibre layer in which the fibres are oriented substantially in one single direction.
Fibre fabric - "Fibre fabric" shall here be interpreted to be a fibre layer in which the fibres are oriented in two or more directions, and in which the fibres in the different directions are woven or twisted together in some way.
Prepreg - "Prepreg" shall here be interpreted as being a fibre tape or a fibre fabric or a non-woven fibre cloth or any other type of fibre layer, which has been impregnated with a heat curing matrix.
Stack - "Stack" or "fibre stack" shall here be interpreted to be a number of prepregs put on top of each other.
Downforming - "Downforming" shall here be interpreted to be the process of applying a pressure on a prepreg being placed on a moulding tool, said pressure being applied in a specific direction in order to make the prepreg to better follow the surface of the moulding tool.
Dry fibre layer - "Dry fibre layer" and "dry layer" shall here be interpreted to be a fibre layer, which has not been pre-impregnated with any sticky material at all, or which has been pre-impregnated with such small quantities that these quantities do not affect the stickyness, but the material slides easily when in contact with the moulding tool, which may be of metal.
Male tool - "Male tool" and "moulding tool of male type" shall here be interpreted to be a moulding tool were all or most of the surfaces being oriented towards the article being produced are convex, and thus the prepreg is arranged externally on the moulding tool.
Female tool - "Female tool" and "moulding tool of female type" shall here be interpreted to be a moulding tool were all or most of the surfaces being oriented towards the article being produced are concave, and thus the prepreg is arranged inside or within the moulding tool.

One way to avoid that the prepreg laminate sticks to the female tool is to place a dry fabric, e.g. made of glass fibre, externally on the prepreg laminate. This dry fabric layer slides well on the surfaces of the female tool, and helps to hinder that the prepreg laminate gets stuck. In this way, good tolerances of the composite surfaces may be obtained. During the following curing process, the dry fabric is filled with matrix resin from the surrounding prepreg material, which has a surplus of matrix resin.

Fig. 1a shows a male tool 140 having a fibre stack 160 arranged and a dry fabric 155 arranged on the outside of the fibre stack 160. The dry fabric 155 has been arranged with a fabric surplus 170, which advantageously may be used for sealing of the edges of the fibre stack after that the fibre stack has been tilted or overturned into a female tool.

Fig. 1b shows a female tool with arranged fibre stack 160 after overturning has been carried out, wherein the dry layer 155 ends up closest to the surface of the moulding tool 150. Before downforming, a vacuum bag 165 is arranged over the fibre stack including the dry layer 155, wherein the vacuum bag seals towards the female tool 150 by seal 171. An air evacuator 175 is arranged for evacuating air out of the vacuum bag.

Thus, the method comprises the step of arranging an edge sealing part 170, being continuous with the dry layer 155, so that the layer encloses an edge 168 of the fibre stack 160, so that an edge sealing is achieved. The edge sealing portion 170 is suitably extended downwards on the other side of the edge 168 with a portion which may be referred to as an overlapping part 172. This reduces, or eliminates, the need of post-treatment of the edges of the manufactured component, which otherwise often is necessary for minimising the risk of the edge being splinted. The dry layer is preferably made of a glass fibre fabric.

In yet another advantageous embodiment, the dry layer is arranged by means of a metal net, as stand alone or in combination with a glass fibre fabric. In this way, an electrically conducting layer integrated in the composite product is obtained directly at the stage of production which is advantageous in order to protect the manufactured aircraft from lightning strokes and other electrical inference.

It is an advantage if the dimensions of the male tool and the female tool are adapted to the thickness of the fibre stack, so that on one hand the fibre stack provided with a dry surface easily slides in place when overturned, and on the other that the female tool has been given such dimensions that the finished component is endowed with the desired dimensions.

## Claims

1. A method for producing an article of composite material comprising the steps of:
- providing a moulding tool of male type (140):
- placing one or several prepregs on the moulding tool, forming a fibre stack (160);
- providing a moulding tool of female type (150);
**characterised by** the following steps
- placing a dry layer (155), e.g. fabric, externally on the fibre stack, forming a fibre stack with a dry surface;
- overturning or tilting the stack having a dry surface from the male tool (140) to the female tool (150).

2. The method according to claim 1, further comprising the step of arranging said dry fibre layer (155) so that it encloses the edge (168) of the fibre stack (160).

3. The method according to claim 1 or 2, where the dry layer (155) is made of a metal net or another suitable metal structure.

4. The method according to claim 1 or 2, where the dry layer (155) is made of glass fibre.

5. The method according to claim 1 or 2, where the dry layer (155) is made of a combination of metal and glass fibre.

6. The method according to claim 1 or 2, wherein the dimensions of the male tool (140) and the female tool (150) are adjusted to fit each other, and are adjusted in accordance with the thickness of the fibre stack (160) having a dry surface, so that the fibre stack having a dry surface easily slides down in the female tool (150) when being overturned.

## Patentansprüche

1. Verfahren zum Herstellen eines Artikels aus einem Verbundmaterial, das die folgenden Schritte umfasst:
- Bereitstellen eines Formwerkzeugs männlicher Ausführung (140);
- Anordnen eines oder mehrerer Prepregs an dem Formwerkzeug, so dass eine Faserschichtung (160) ausgebildet wird;
- Bereitstellen eines Formwerkzeugs weiblicher Ausführung (150);
**gekennzeichnet durch** die folgenden Schritte
- Anordnen einer trockenen Schicht (155), zum Beispiel eines Gewebes, äußerlich an der Faserschichtung, so dass eine Faserschichtung mit einer trockenen Oberfläche ausgebildet wird;
- Stürzen oder Kippen der Schichtung, die eine trockene Oberfläche aufweist, von dem männlichen Werkzeug (140) zu dem weiblichen Werkzeug (150).

2. Verfahren nach Anspruch 1, das ferner den Schritt des Anordnens der trockenen Faserschicht (155) auf eine solche Weise, dass diese den Rand (168) der Faserschichtung (160) umschließt, umfasst.

3. Verfahren nach Anspruch 1 oder 2, bei dem die trockene Schicht (155) aus einem Metallnetz oder einer anderen geeigneten Metallstruktur besteht.

4. Verfahren nach Anspruch 1 oder 2, bei dem die trockene Schicht (155) aus Glasfaser besteht.

5. Verfahren nach Anspruch 1 oder 2, bei dem die trockene Schicht (155) aus einer Kombination aus Metall und Glasfaser besteht.

6. Verfahren nach Anspruch 1 oder 2, bei dem die Abmessungen des männlichen Werkzeugs (140) und des weiblichen Werkzeugs (150) so angepasst sind, dass sie einander entsprechen, und gemäß der Dicke der Faserschichtung (160) mit trockener Oberfläche so angepasst sind, dass die Faserschichtung (160) mit trockener Oberfläche in dem weiblichen Werkzeug (150) leicht nach unten gleitet, wenn sie gestürzt wird.

## Revendications

1. Procédé pour produire un article en matériau composite comprenant les étapes consistant à :
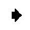 fournir un outil de moulage de type mâle (140) ;
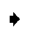 placer un ou plusieurs préimprégnés sur l'outil de moulage, formant une pile de fibres (160) ;
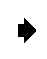 fournir un outil de moulage de type femelle (150) ;
**caractérisé par** les étapes suivantes consistant à :
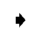 placer une couche sèche (155), par exemple un tissu, à l'extérieur sur la pile de fibres, formant une pile de fibres avec une surface sèche ;
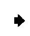 retourner ou incliner la pile comportant une surface sèche de l'outil mâle (140) vers l'outil femelle (150).

2. Procédé selon la revendication 1, comprenant en outre l'étape consistant à agencer ladite couche de fibres sèche (155) de sorte qu'elle entoure le bord (168) de la pile de fibres (160).

3. Procédé selon la revendication 1 ou 2, où la couche sèche (155) est constituée d'un filet métallique ou d'une autre structure métallique appropriée.

4. Procédé selon la revendication 1 ou 2, où la couche sèche (155) est constituée d'une fibre de verre.

5. Procédé selon la revendication 1 ou 2, où la couche sèche (155) est constituée d'une combinaison de métal et de fibre de verre.

6. Procédé selon la revendication 1 ou 2, dans lequel les dimensions de l'outil mâle (140) et de l'outil femelle (150) sont ajustées pour correspondre les unes aux autres, et sont ajustées en fonction de l'épaisseur de la pile de fibres (160) comportant une surface sèche, de sorte que la pile de fibres ayant une surface sèche glisse facilement dans l'outil femelle (150) lorsqu'elle est retournée.
